# DEMANDE DE BREVET EUROPEEN

(11) **EP 0 662 448 A1**
(43) Date de publication de la demande: **12.07.1995**
(21) Numéro de dépôt: 94403041.0
(22) Date de dépôt: 28.12.1994
(51) Int. Cl.: C01B 17/92

(54) **Nouveau procédé de purification d'acide sulfurique impur**

(30) Priorité: 06.01.1994 FR 9400145
(71) Demandeur: INSTITUT FRANCAIS DU PETROLE, F-92502 Rueil-Malmaison (FR)
(72) Inventeur: Joly, Jean-François, F-75003 Paris (FR); Benazzi, Eric, F-78360 Montesson (FR); Chaigne, Frédéric, F-85230 Bauvoir sur Mer (FR); Bernhard, Jean-Yves, F-91540 Mennecy (FR); Viltard, Jean-Charles, F-26000 Valence (FR)
(74) Mandataire: Andreeff, François

(57) **Abrégé**

L'invention concerne un procédé de purification d'acide sulfurique, ayant notamment servi comme catalyseur dans les réactions d'alkylation aliphatique.

Elle est caractérisée en ce que l'acide sulfurique est imprégné sur un support poreux organique ou minéral, par exemple la silice, puis sous cette forme, est soumis à au moins une calcination en vue d'éliminer les matières organiques hydrocarbonées que cet acide sulfurique pourrait contenir.

## Description

La présente invention concerne un nouveau procédé d'élimination des matières organiques hydrocarbonées contenues dans un acide sulfurique impur. Elle concerne également le traitement de l'effluent gazeux résultant de l'élimination des matières organiques hydrocarbonées.

La présente invention concerne en particulier un procédé de traitement d'acide sulfurique usé provenant de la réaction d'alkylation catalytique d'isobutane et/ou d'isopentane au moyen d'une oléfine, qui permet d'obtenir au moins un produit par exemple dans le groupe constitué par les diméthylbutanes, les triméthylpentanes, les triméthylhexanes et les triméthylheptanes.

De nombreux procédés chimiques et pétrochimiques utilisent l'acide sulfurique comme catalyseur. Cet acide est en règle générale recyclé aussi longtemps que sa teneur en impuretés, notamment organiques, le permet. On opère alors une purge d'un acide sulfurique relativement chargé en matières organiques qui est envoyé dans une usine de retraitement. Le seul procédé industriel de traitement de ces rejets d'acide sulfurique est un procédé au cours duquel l'acide est transformé en dioxyde de soufre SO₂ par combustion, puis celui-ci est transformé en anhydride sulfurique (SO₃) qui est ensuite lui même retransformé en acide sulfurique par absorption dans l'eau. Parmi les procédés producteur d'acide sulfurique impur, souvent dénommé boues sulfuriques, on peut citer à titre d'exemple le procédé de synthèse d'alcools à partir d'hydrocarbures éthyléniques (en particulier la synthèse d'éthanol à partir d'éthylène, la synthèse d'isopropanol à partir du propylène et de celle de butanol-2 à partir d'un mélange de butène-1 et de butène-2), le procédé d'alkylation de l'isobutane par des oléfines telles que le propylène ou les butènes et les procédés de purification des hydrocarbures dans les opérations de raffinage.

Ces procédés, et en particulier le procédé d'alkylation, produisent des quantités d'acide usé relativement faibles qui sont encore aujourd'hui considérées comme trop faibles pour être traitées sur place. C'est ainsi que le produit est alors expédié dans des usines de production d'acide sulfurique où il est retransformé en acide sulfurique pur qui est alors reexpédié vers l'unité d'alkylation. Très souvent, les unités de traitement des boues sulfuriques sont éloignées du lieu de production de ces boues, ce qui entraîne de nombreux risques liés au transport, généralement routier, d'un produit aussi dangeureux et polluant que les boues sulfuriques ou l'acide pur. Ce traitement comprend une première étape de combustion par la transformation de l'acide en SO₂. De plus, l'acide pur obtenu est le plus souvent plus cher que de l'acide frais et l'usine de retraitement n'accepte d'effectuer ce traitement que si le client fournisseur de la boue reprend cet acide pur, ce qui implique pour l'usine d'alkylation un surcoût non négligeable.

De nombreux procédés de purification d'acide usé on été décrits antérieurement. C'est ainsi que le brevet US-A-3652708 décrit une méthode de réduction de la teneur en hydrocarbures d'un acide résiduaire par traitement par un excès d'oléfine avant son envoi dans une usine de combustion, ce qui n'élimine pas complètement les problèmes mentionnés ci-avant. Le procédé décrit dans le brevet européen EP-B-52548 utilise de l'acide nitrique comme oxydant des matières organiques hydrocarbonées. Ce procédé implique le traitement des gaz formés dans une unité d'élimination des oxydes d'azote, ce qui est un inconvénient important. Il a également été décrit dans un article de Shenfel'd D.E. et al publié dans Zhurnal Prikaladnoi Khimii, Vol. 61, n°7, pp. 1550 à 1553, July 1988, un procédé de traitement d'un acide usé par décomposition de l'acide usé en deux étapes. Au cours de la première étape réalisée à une température comprise entre 50 et 270°C, il se forme un résidu solide noir ressemblant à du coke. Ce résidu, dont la masse correspond sensiblement à la teneur en carbone de l'acide usé de départ, est ensuite oxydé en présence d'un courant d'air à une température supérieure à 400°C. Au cours de la première étape, la conversion des matières premières organiques hydrocarbonées présentes dans l'acide usé de départ, mesurée à partir de la quantité d'oxydes de carbone formés par réaction avec l'acide sulfurique est d'environ 12%. Le procédé décrit dans ce document présente l'inconvénient majeur de produire un résidu carboné solide et de nécessiter une oxydation à l'air de ce résidu carboné à une température très élevée. Dans la demande de brevet français de numéro d'enregistrement national 92/02072, des agents dont le pouvoir oxydant est supérieur au pouvoir oxydant de l'acide sulfurique sont introduits dans l'acide usé à traiter, parmi ces agents oxydants sont cités les composés H₂O₂, H₂SO₅ et H₂S₂O₈. L'utilisation de ces agents rend le procédé complexe et coûteux.

Le procédé de la présente invention permet d'éliminer les problèmes liés aux techniques mises en oeuvre dans les procédés de l'art antérieur et propose une solution qui peut être mise en place facilement sur le lieu de production de la boue sulfurique provenant notamment d'une unité d'alkylation.

Le procédé selon la présente invention concerne un procédé d'élimination des matières organiques hydrocarbonées contenues dans une solution d'acide sulfurique impur comprenant généralement à ce stade environ 50 à environ 99,5% en poids d'acide sulfurique et au moins 0,1% en poids, exprimé en atomes de carbone, de matières organiques sous forme libre ou combinée, caractérisé en ce que la solution d'acide sulfurique impur est imprégnée sur un support poreux organique ou minéral, de préférence sur de la silice.

Conformément à l'invention, l'acide sulfurique liquide impur qui peut provenir d'une unité d'alkylation sulfurique utilisant, comme catalyseur de l'acide sulfurique liquide, est dans une première étape imprégné sur un support poreux organique ou minéral, par exemple une silice avant d'être retraité dans une deuxième étape définie ci-dessous.

Pour réaliser la première étape, on peut utiliser toutes les techniques bien connues de l'homme du métier. Lorsqu'on utilise plus particulièrement de la silice comme support d'imprégnation, le diamètre moyen des particules de silice est généralement compris entre 0,1 et 400 microns (1 micron = 10⁻⁶ m).

Eventuellement, notamment lorsque le support d'imprégnation est de la silice, ce support peut contenir des impuretés comme par exemple les oxydes, les alcalins, les alcalinoterreux, les composés d'aluminium ou toute autre impureté connue de l'homme du métier, la quantité totale de ces impuretés n'excédant pas généralement 2 % en poids par rapport à la silice.

On peut éventuellement prétraiter comme suit la silice utilisée :

Dans ce prétraitement, la silice est calcinée (ou séchée) à une température supérieure à 50 °C, de préférence supérieure à 80 °C et de manière encore plus préférée comprise entre 100 et 500°C, par exemple égale à environ 200 °C. La durée de cette étape de calcination est habituellement comprise entre 10 minutes et 50 heures. La calcination peut être effectuée en présence d'un gaz contenant de l'oxygène moléculaire par exemple de l'air ou un mélange air/azote, de débit compris entre 0,001 et 10 l/h/g. Ensuite on procède, comme indiqué ci-dessus à l'imprégnation de ladite silice calcinée par la solution d'acide sulfurique impur.

Le procédé de traitement de l'acide impur contenu au sein de la porosité de la silice comprend une ou deux parties. Selon la composition chimique de l'acide sulfurique impur à traiter, il est possible de ne réaliser que la première partie.

Dans la première partie, la silice imprégnée par l'acide impur est calcinée sous débit d'un gaz, par exemple un gaz contenant de l'oxygène moléculaire, par exemple de l'air ou de l'oxygène pur, de débit compris entre 0,05 et 10 l/h/g de matière à traiter et de préférence entre 0,1 et 5 l/h/g, à une température comprise entre 100 et 400°C, et de préférence comprise entre 100 et 350°C et de manière encore plus préférée entre 170 et 330°C. La durée de ce traitement est avantageusement comprise entre quelques minutes (3 minutes par exemple) et 8 heures.

Dans la seconde partie, on calcine, sous débit d'un gaz, par exemple un gaz contenant de l'oxygène moléculaire, par exemple de l'air ou de l'oxygène pur, de débit compris entre 0,05 et 10 l/h/g de matière à traiter le solide obtenu à la fin de la première partie à une température comprise entre 400 et 600°C et de préférence comprise entre 450 et 550°C de façon à éliminer les dépôts hydrocarbonés encore présents sur la silice à la fin de la première partie.

Le traitement de calcination, première et seconde partie, conduit à la production d'une phase gazeuse comprenant les produits formés par oxydation des composés hydrocarbonés initialement présents dans l'acide sulfurique impur et par du dioxyde de soufre SO₂, et à une phase liquide condensable constituée d'acide sulfurique purifié.

Il a été découvert que d'une façon surprenante, au cours de la deuxième étape, la première partie permet de récupérer une part importante de l'acide sulfurique contenu dans la silice ; l'acide sulfurique est ainsi condensé des vapeurs sortant du four tubulaire dans lequel se déroule la calcination de la première partie du procédé selon l'invention. L'acide sulfurique condensé est suffisamment pur pour entrer dans la fabrication d'un catalyseur d'alkylation aliphatique, après mélange avec un oléum de façon à ce que la teneur en eau de la solution d'acide sulfurique ainsi préparée soit inférieure à environ 2% en poids.

De plus, la silice calcinée à l'issue de la deuxième étape du procédé selon l'invention peut être de nouveau imprégnée par une solution d'acide sulfurique impur.

Dans le procédé selon l'invention, les gaz formés au cours de la deuxième étape de calcination et plus particulièrement au cours de la première partie de la deuxième étape ne sont, le plus souvent, pas rejetés directement dans l'atmosphère à la fois pour des raisons de valorisation des produits qu'ils contiennent et également pour des raisons de législation concernant la protection de l'environnement. Ces gaz sont le plus souvent soumis à une réduction permettant de transformer en soufre la majeure partie des oxydes de soufre qu'ils contiennent. Dans le cas où le procédé selon la présente invention est utilisé dans la raffinerie, il s'intègre très bien dans cette raffinerie et le dioxyde de soufre formé peut être envoyé dans une unité CLAUS (traitement des fumées), qui est pratiquement toujours présente dans cet environnement, dans laquelle il est réduit en soufre qui est ensuite éventuellement retransformé par oxydation en anhydride sulfurique.
L'exemple suivant illustre l'invention sans en limiter la portée

### Exemple 1

Retraitement d'un acide sulfurique impur provenant d'une unité d'alkylation de l'isobutane par les oléfines utilisant de l'acide sulfurique liquide comme catalyseur.

On procède (prétraitement du support) à la calcination sous air sec à un débit égal à 5 l/h/g de 10 g de silice de volume poreux total égal à 0,8 cm³/g à 150°C pendant 4 heures, le diamètre des particules de silice est égal à 110 µm (1 µm= 10⁻⁶ m). On imprègne ensuite cette silice séchée par 7,5 cm³ d'un acide sulfurique contenant environ 4,5% en poids d'eau et environ 5,5% en poids d'hydrocarbures. (Première étape du procédé).

La poudre sèche obtenue est calcinée, sous un débit de 24 l/h d'air sec, à une température de 290°C pendant 5 heures, les gaz sont refroidis et le liquide condensé est recueilli dans un ballon. (Deuxième étape du procédé).

Après calcination, on récupère d'une part une fraction liquide dont la masse est égale à 8.3 g, et d'autre part une poudre séche dont la masse est égale à 10,57 g. La masse correspondant aux gaz non condensés correspond à 5.16 g.

Le liquide recueilli est de l'acide sulfurique de titre égal à environ 65% poids, le résidu carboné présent sur la silice peut être totalement éliminé par calcination sous air à 550°C pendant 4 heures.

Le procédé selon la présente invention permet de récupérer environ 60% de l'acide sulfurique initialement présent dans l'acide impur.

## Revendications

1. Procédé de purification d'une solution d'acide sulfurique impur par élimination des matières organiques hydrocarbonées qu'il contient, ladite solution renfermant en poids de 50 à environ 99,9% d'acide sulfurique et des matières organiques sous forme libre ou combinée, procédé caractérisé en ce que :
(a) dans une première étape la solution d'acide sulfurique impur est imprégnée sur un support poreux organique ou minéral.
(b) dans une deuxième étape, ledit support ainsi imprégné d'acide sulfurique est calciné sous débit d'un gaz, à une température comprise entre 100 et 400°C.

2. Procédé selon la revendication 1 dans lequel à l'issue de la calcination réalisée au cours de la seconde étape, appelée première partie de la calcination, on poursuit ladite seconde étape par une calcination (sous débit d'un gaz), appelée deuxième partie de la calcination, à une température comprise entre 400 et 600°C de façon à éliminer les dépôts hydrocarbonés encore présents sur ledit support à la fin de ladite première première partie de la calcination effectuée entre 100 et 400°C.

3. Procédé selon l'une des revendications 1 et 2 dans lequel ledit support est de la silice

4. Procédé selon la revendication 3 dans lequel la silice, avant d'être imprégnée par l'acide sulfurique impur est préalablement soumise à un prétraitement au cours duquel ladite silice est calcinée à une température supérieure à 50°C.

5. Procédé selon la revendication 4 dans lequel ledit prétraitement est effectué à une température supérieure à 80°C, pendant une durée comprise entre 10 minutes et 50 heures, en présence d'un gaz, avec un débit compris entre 0,001 et 10 l/h/g.

6. Procédé selon l'une des revendications 1 à 5 dans lequel au cours de la seconde étape, dans ladite première partie de la calcination, ledit support imprégné d'acide sulfurique impur est de la silice et est calciné à une température comprise entre 100 et 350°C.

7. Procédé selon la revendication 6 dans lequel la calcination est réalisée entre 170 et 330°C.

8. Procédé selon l'une des revendications 1 à 7 dans lequel au cours de la seconde étape, la durée de ladite première partie de la calcination est comprise entre quelques minutes et 8 heures.

9. Procédé selon l'une des revendications 2 à 8 dans lequel ledit support est de la silice et dans lequel au cours de la deuxième étape, ladite deuxième partie de la calcination est effectuée entre 450 et 550°C.

10. Procédé selon l'une des revendications 1 à 9 dans lequel ledit gaz utilisé dans les étapes de calcination dudit prétraitement ou de ladite deuxième étape est un gaz renfermant de l'oxygène moléculaire.

11. Procédé selon l'une des revendications 1 à 10 dans lequel les gaz formés au cours de la deuxième étape, pendant la calcination, sont soumis à une réduction, avec transformation en soufre de la majeure partie des oxydes de soufre qu'ils contiennent.
